# EUROPÄISCHE PATENTSCHRIFT

(11) **EP 0 982 966 B1**
(45) Veröffentlichungstag und Bekanntmachung des Hinweises auf die Patenterteilung: **11.10.2006**
(21) Anmeldenummer: 99110900.0
(22) Anmeldetag: 08.06.1999
(51) Int. Cl.: H04Q 11/04, H04L 29/06

(54) **Verfahren zum Aufbau einer paketorientierten Datenübertragung zwischen Teilnehmern**
Method to set up a packet oriented data transmission between subscribers
Procédure pour établir une transmission de données par paquets entre abonnés

(30) Priorität: 28.08.1998 DE 19839034
(43) Veröffentlichungstag der Anmeldung: 01.03.2000
(73) Patentinhaber: ROBERT BOSCH GMBH, 70442 Stuttgart (DE)
(72) Erfinder: Petras, Dietmar, 71554 Weissach im Tal (DE); Radimirsch, Markus, 30880 Laatzen (DE)

(56) Entgegenhaltungen:
- EP-A- 0 544 975
- LEGG P J ET AL: "ACTS MEDIAN: A WIRELESS LAN SUPPORTING ATM AT 155 MB/S" IEE COLLOQUIUM ON ATM TRAFFIC IN THE PERSONAL MOBILE COMMUNICATIONS ENVIRONMENT, IEE, LONDON, GB, 11. Februar 1997 (1997-02-11), Seiten 6-1-6-5, XP000749688

## Beschreibung

### Stand der Technik

Die Erfindung betrifft ein Verfahren zum Aufbau einer paketorientierten Datenübertragung zwischen Teilnehmern über ein gemeinsames Übertragungsmedium unter Verwendung mindestens einer zentralen Einheit. Bei einer paketorientierten Datenübertragung, beispielsweise bei der Übertragung von ATM-Zellen tauschen ein oder mehrere Teilnehmer, bzw. deren Endgeräte untereinander oder mit einem zentralen Netzknoten - einer sogenannten zentralen Einheit - ATM-Zellen über einen gemeinsamen Kanal aus.

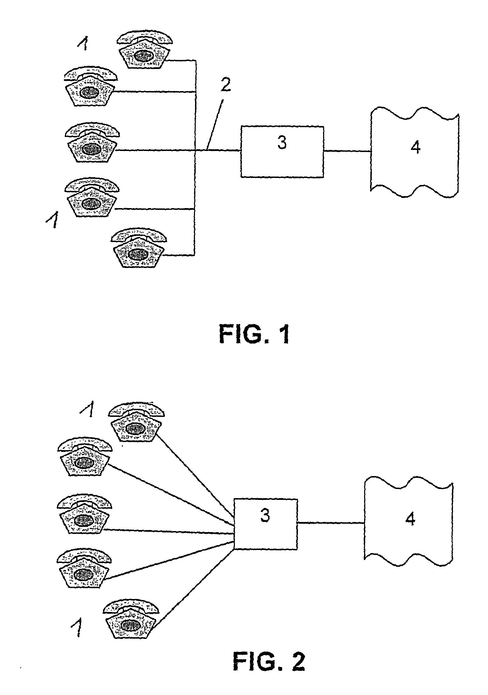

Mögliche Medien sind ein Funkkanal oder ein passives optisches Netz oder Kabelverteilnetze mit koaxialen Kabeln und/oder Glasfasern. Das Prinzip ist in Figur 1 gezeigt. An der Stelle eines Teilnehmergerätes kann sich auch ein Konzentrator mit mehreren Teilnehmergeräten befinden (Nebenstellenanlage im Besitz des Teilnehmers oder Network-Unit im Besitz des Netzbetreibers). Im folgenden wird ohne Einschränkung der Allgemeinheit von Terminals gesprochen. Mit 1 sind die Teilnehmer bzw. deren Terminals bezeichnet, mit 2 das gemeinsame Übertragungsmedium, mit 3 die zentrale Einheit und mit 4 das Übertragungsnetz. In bekannten leitungsvermittelten Systemen (z. B. Analogtelephon, ISDN) hat jedes Terminal einen eigenen Anschluß an einen Netzknoten, wo diese Anschlüsse auf eine oder wenige Leitungen gebündelt werden können, siehe Figur 2. Das gleiche gilt für Terminals in ATM-Netzen (Asynchroner Transfer Modus) . Ein solcher Netzknoten 5 stellt im Fall von ATM einen ATM-Multiplexer dar. In ATM-Netzen erfolgt in ATM-Netzknoten ein asynchrones Zeitmultiplex von ATM-Zellen. Dabei müssen einlaufende ATM-Zellen ggf. in Puffern (sogenannter Zellenpuffer) zwischengespeichert werden, weil kurzzeitig mehr Ankünfte von ATM-Zellen erfolgen können, als über die Ausgangsleitungen abgeführt werden können. In ATM-Netzen ist es wesentlich, daß alle Netzknoten, die mit den getragenen Diensten vereinbarte Dienstgüte unterstützen. Da ATM-Zellen verschiedener Verbindungen unterschiedlich schnell (charakterisiert durch Übertragungsrate und Übertragungsverzögerung) und zuverlässig (charakterisiert durch Häufigkeit von Übertragungsfehlern und Datenverlusten) übertragen werden müssen, ist in allen ATM-Netzknoten (in denen asynchrones Zeitmultiplex von ATM-Zellen erfolgt) eine Pufferverwaltung notwendig, die das Multiplexen von ATM-Zellen (vor oder bei dem Abführen von ATM-Zellen über eine Ausgangsleitung) durch einen Algorithmus zur Reihenfolgesteuerung von ATM-Zellen (sogenannte Bedienstrategie) steuert (siehe [1]). Der Mechanismus, der den Algorithmus ausführt, wird Scheduler genannt. Übliche Bedienstrategien verwenden statische Prioritäten, die ATM-Zellen von Verbindungen mit hohen QoS-Anforderungen eine hohe Priorität zuordnen und diese bevorzugt übertragen ("bedienen"). Üblich ist die Verwendung von bis zu fünf Prioritätsstufen. Innerhalb einer Prioritätsstufe wird die Übertragungsreihenfolge ebenfalls durch eine eingebettete Bedienstrategie gesteuert, z. B. First-Com-First-Serve, FCFS. Die einzelnen Prioritätsstufen können unterschiedliche eingebettete Bedienstrategien anwenden. Der Scheduler hat zu jeder Zeit Kenntnis von der Belegung des Zellenpuffers durch ATM-Zellen (z. B. ausgedrückt durch die Anzahl gepufferter ATM-Zellen und/oder deren Ankunftszeiten) und verwendet dieses Wissen bei der prioritätsgesteuerten Bedienung. In den betrachteten Netzen mit gemeinsamer Nutzung eines Übertragungsmediums erfolgt in Aufwärtsrichtung (Upstream, von den Terminals zur zentralen Einheit) auf dem Übertragungsmedium ein asynchrones Zeitmultiplex von ATM-Zellen. Um Dienstegüte garantieren zu können, muß dieses Multiplexen durch die Verwendung eines Schedulers gesteuert werden. Im Gegensatz zum normalen ATM-Netzknoten (wie zuvor beschrieben) ist der Zellenpuffer auf die einzelnen Terminals verteilt, denn jedes Terminal muß seine eigenen ATM-Zellen ggf. vor der Übertragung über das gemeinsame Übertragungsmedium zwischenspeichern, um den erlaubten Übertragungszeitpunkt abzuwarten. Daher ist es in der zentralen Einheit wichtig, die Belegung der Zellenpuffer in den Terminals zu kennen, wie im Fall des an einer Stelle konzentrierten Schedulers bei einzelnen Teilnehmeranschlüssen üblich. Es entsteht nun das Problem, daß die zentrale Einheit die Belegung der Zellenpuffer in den Terminals vor der Übertragung der ATM-Zellen kennen muß, um so zentral zu entscheiden, welchem Terminal wann und für wie lange das Übertragungsmedium zugeteilt werden soll. Daher wird ein Mechanismus benötigt, mit dessen Hilfe die Terminals die Belegung ihrer Zellenpuffer hinreichend häufig und genau an die zentrale Einheit signalisieren können. Der Mechanismus muß effizient sein, um die durch den Signalisierverkehr belegten Übertragungsressourcen gering zu halten. Der Grad der Genauigkeit der Signalisierung der Pufferbelegung von den Terminals zur zentralen Einheit muß der zentralen Einheit ein hinreichend genaues Bild über die Pufferbelegung liefern. Für die Übertragung von ATM-Zellen auf einem gemeinsamen Übertragungsmedium existieren bereits Verfahren. Diese Verfahren sind der ISO/OSI-Schicht 2 zuzuordnen (Data Link Control Layer, DLC, mit Logical Link Control sublayer, LLC, und Medium Access Control Sublayer, MAC). Genauere Informationen finden sich z. B. in [2], [3], [4]. In handelsüblichen ATM-Netzknoten (ATM-Vermittlungsstelle, engl. ATM-Switch) ist es üblich, den Scheduler auf die derzeit definierten ATM-Dienstklassen (CBR, VBR-rt, VBR-nrt, ABR, UBR) auszulegen. Derzeit existieren fünf Diensteklassen, so dass sich die Verwendung von fünf Prioritätsstufen anbietet. Weitere Dienstklassen befinden sich bei ITU-T und ATM-Forum in der Standardisierung. Ein detaillierter Überblick über die verschiedenen Optionen zur Kodierung und Übertragung der Zellenpufferbelegung von Terminals mittels Ressourcenanforderungen ist in [5] angegeben. Zur Erklärung sei angeführt, dass eine DLC-Verbindung (Data Link Control Connection, DLCC) eine Verbindung der DLC-Schicht darstellt und häufig mit einer ATM-Verbindung (Virtual Channel, VC) gleichzusetzen ist. In [5] wird ausgeführt, dass Resource Requests (Ressourcenanforderung) und Resource Grants (Ressourcenzuweisung) am besten je DLC-Verbindung erfolgt. Eine weitere Möglichkeit, die in [5] nicht erwähnt ist, ist die Einführung von weniger Prioritätsstufen als ATM-Dienstklassen existieren, wobei in diesem Fall mehrere Diensteklassen einer Priorität zugewiesen werden können. Des weiteren ist es auch möglich, bestimmte ATM-Verbindungen einer ATM-Dienstklasse (z. B. niedrigratige) einer anderen Prioritätsstufe zuzuweisen, als die restlichen Verbindungen dieser Dienstklasse. Dies ist z. B. in [6] beschrieben. Der Vorteil dieses Verfahrens ist eine höhere Flexibilität bei der Realisierung des Schedulers sowie eine Verringerung des Signalisierverkehrs für Ressourcenanforderungen und Ressourcenzuweisungen.

Aus der EP-A-0 544 975 ist ein Verfahren zur dynamischen Zeitschlitzzuteilung bei einer paketorientierten Datenübertragung je nach angeforderter Bandbreite bekannt. Ein Teilnehmer, welcher eine Datenübertragung wünscht, meldet sich bei einer zentralen Einheit und fragt, ob er assoziiert werden kann. Wenn die zentrale Einheit dies zulässt, wird dem Teilnehmer eine Zuordnungsidentifizierung für nachfolgende Kommunikationsphasen zugewiesen. Es wird dem Teilnehmer anhand seiner Bandbreitenanforderung eine Anzahl von Zeitschlitzen zugeteilt, die auch während des Betriebes angepasst werden kann.

### Vorteile der Erfindung

Die zuvor beschriebene Ressourcenanforderungen und - zuweisungen in den MAC-Protokollen führen unter gewissen Voraussetzungen alle zum Ziel, nämlich die Garantie der Dienstgüte bei der Verwendung eines gemeinsamen Übertragungsmediums. Allerdings sind alle Verfahren nicht universell, d. h. jedes Verfahren funktioniert unter bestimmten Voraussetzungen gut; wenn sich diese Voraussetzungen jedoch ändern, kann es zu erheblichen Performanceeinbrüchen kommen (Performance bewertet sich hierbei gebotene Dienstgüte und Umfang der Übertragungsressourcen, der durch protokollinternen Signalisierverkehr belegt wird). Bisherige Formate wurden immer vor dem Hintergrund einer bestimmten Bedienstrategie in der zentralen Einheit entworfen und letztlich im Standard festgeschrieben. Aus den oben genannten Gründen ist eine solche Festschreibung aber nicht wünschenswert.

Auf der anderen Seite ist ein wesentliches Ziel von Standards Interoperabilität, d. h. eine zentrale Einheit eines Herstellers soll mit einem Terminal eines anderen Herstellers kommunizieren können. Die Erfindung bringt die Forderungen nach Flexibilität einerseits und Interoperabilität andererseits zusammen, indem sie einen Satz von Nachrichtenformaten für Ressourcenanforderungen und -zuweisungen festschreibt, den alle Terminals und zentrale Einheiten beherrschen müssen. Zugleich ist es möglich, beliebige, z. B. im Standard nicht spezifizierte, weil herstellerspezifische Formate zu verwenden. Die Einigung auf die verwendeten Formate wird während der Anmeldung eines Terminals bei der zentralen Einheit, insbesondere zur sogenannten Registrierzeit ausgehandelt.

Wesentlich für die Erfindung ist, daß durch einen bekannten Satz ausgewählter Nachrichtenformate für die Ressourcenanforderungen und -zuweisungen die Interoperabilität gewährleistet werden kann. Dazu wird vereinbart, welche Formate von jedem Terminal bzw. zentraler Einheit mindestens unterstützt werden müssen. Erweiterte oder modifizierte Formate können herstellerspezifisch verwendet werden. Falls Terminals und die zentrale Einheit von verschiedenen Herstellern kommen, ist Kommunikation auf der Basis der vereinbarten und ausgewählten Formate stets möglich. Bei zusätzlicher Verwendung von herstellerspezifischen Formaten kann es zu Einschränkungen kommen, d. h. herstellerspezifische Mechanismen, die eine gegenüber einem Standard höhere Dienstgüte oder höhere Effizienz/Kapazität ermöglichen, z. B. bessere Garantie von Übertragungsverzögerungen bei Echtzeitdiensten), können nicht angewendet werden. Falls ein Terminal weitere der von der zentralen Einheit angebotenen Formate beherrscht, können diese und die damit verbundenen herstellerspezifischen Mechanismen verwendet werden. Dies wird im allgemeinen der Fall sein, wenn Terminal und zentrale Einheit von demselben Hersteller kommen.

### Zeichnungen

Anhand der weiteren Zeichnungen werden nun Ausführungsbeispiele der Erfindung näher erläutert. Es zeigen
Figur 3 ein Signalisierungsprinzip für übertragene ATM-Zellen,
Figur 4 den Ablauf zum Aufbau einer paketorientierten Datenübertragung aus Sicht eines Terminals,
Figur 5 eine zentrale Einheit mit Netzanschluß ohne assoziierte Terminals,
Figur 6 Beispiele für mögliche Ressourcenanforderungsformate,
Figur 7 die Anmeldung eines Terminals bei der zentralen Einheit,
Figur 8 die Situation nach einer Assoziierung von zwei weiteren Terminals
Figur 9 Übertragungsressourcenformate mit Auswahlfeld

### Beschreibung von Ausführungsbeispielen

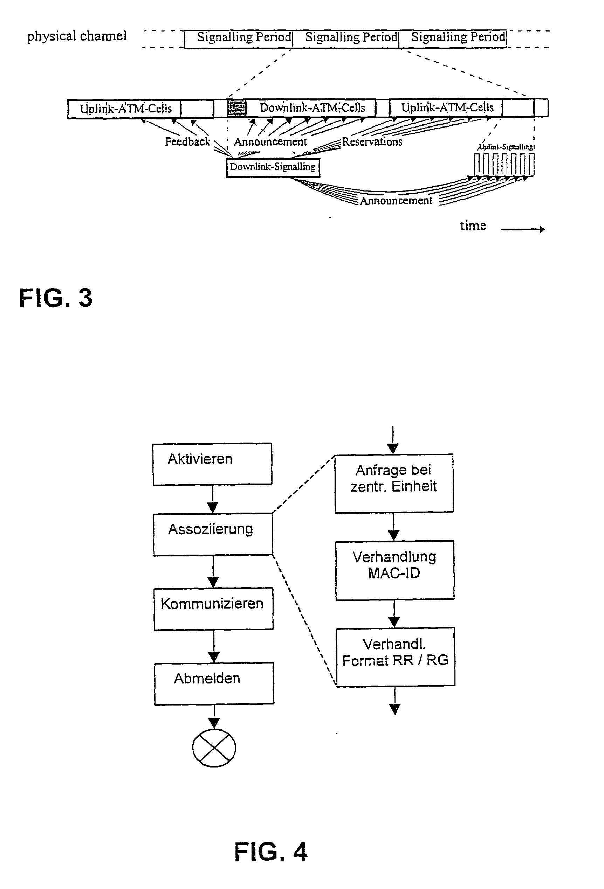

Wie Figur 4 zeigt, besteht der Aufbau einer Datenübertragung zwischen Teilnehmern 1 im wesentlichen aus zwei Phasen:
- Anmeldung eines Terminals 1 bei der zentralen Einheit 3, insbesondere als Funktion der DLC-Schicht. Dieser Vorgang wird im folgenden Assoziierung genannt.
- Kommunikationsphase. In dieser Phase werden DLC-Verbindungen aufgebaut und über diese Benutzerdaten zwischen Teilnehmer 1 bzw. Terminal und zentraler Einheit 3 ausgetauscht.

Das Prinzip dieser Abläufe aus Sicht des Terminals ist in Figur 4 gezeigt. Nach der Aktivierung eines Terminals 1 muß dieses zunächst mit einer zentralen Einheit 3 assoziieren. Zu Beginn der Assoziierungsphase meldet sich ein Terminal 1 bei der zentralen Einheit 3 und fragt an, ob es assoziiert werden kann. Wenn die zentrale Einheit 3 dies zuläßt, verhandeln die Beteiligten zunächst über eine Zuordnungsidentifikation MAC-ID genannt. Anschließend wird über ein Format für Ressourcenanforderung (Resource Request, RR) und Ressourcenzuweisungen (Resource Grants, RG) verhandelt. Hierbei einigen sie sich auf ein günstigstes Format, das von beiden beherrscht wird. Gegebenenfalls kann auch für jede Prioritätsstufe, die von der zentralen Einheit angeboten wird, ein gesondertes Format ausgehandelt werden. Die Reihenfolge der Verhandlungsschritte spielt hierbei keine wesentliche Rolle, d. h. es kann auch erst Formatverhandlung und dann MAC-ID Verhandlung stattfinden. Danach können beide in die Kommunikationsphase eintreten. Während dieser Phase werden eine oder mehrere Verbindungen zwischen Terminal 1 und zentraler Einheit 3 aufgebaut, die verschiedene Anforderungen an die Dienstgüte stellen. Der Austausch der Daten erfolgt wie nachfolgend beschrieben. Dabei fordert das Terminal 1 mit RR Übertragungsressourcen an und bekommt diese von der zentralen Einheit 3 mit Hilfe von RG zugeteilt.

Gemäß Figur 3, die das Grundprinzip der DSA (Dynamic Slot Assignment) zeigt (ausführlich beschrieben in der deutschen Patentanmeldung P197 26 120.5), erfolgt die Übertragung nach dem TD (time division duplex)-System. Der physikalische Kanal ist in Zeitschlitze unterteilt, die jeweils einen Datenburst aufnehmen. Ein solcher Datenburst enthält eine ATM-Zelle einschließlich dem notwendigen Overhead für eine Trainigssequenz, Synchronisation, Vorwärtsfehlerkorrektur FEC und Schutzzeiten. Im Downlink-Signalisierungsburst teilt der zentrale Controller jedem Terminal eine bestimmte Übertragungskapazität in Form von Zeitschlitzen für ein spezifisches Zeitintervall, SP (signalling period) genannt, zu in Abhängigkeit von den Übertragungsressourcenanforderungen der Terminals. Die Gesamtzahl der Schlitze eines SP ist variabel und variiert über der Zeit [4]. Weitere Möglichkeit: Die Dauer der SP ist fix, die Belegung flexibel.

Eine Uplink-Phase besteht aus einer Anzahl von Bursts, die von den Terminals gesendet werden, und einer Uplink-Signalisierungsphase. Während der Uplink-Signalisierungsphase sind die Terminals berechtigt Signalisierungsmeldungen an den zentralen Controller zu senden, wenn sie keine reservierten Zeitschlitze zugeteilt bekommen haben für die Übermittlung innerhalb der normalen Bursts (Piggyback-Verfahren). Für die Uplink Signalisierung ist Polling oder Random Access anwendbar. In der Downlink-Phase werden die Signalisierungs-PDU (Protocol Data Unit) und alle Bursts vom zentralen Controller zu den Terminals gesendet. Innerhalb einer Signalisierungs-PDU werden alle notwendigen Informationen für die nächste SP einschließlich der Signalisierungsschlitze zu den Terminals übertragen. Zusätzlich enthält die Signalisierungs-PDU Feedback-Meldungen für zuvor ausgesendete Uplink-Signalisierinformationen, die beispielsweise für eine Kollionsauflösung oder Funktionen wie automatische Wiederholungsanforderung (ARQ) notwendig sind. Mit diesen Informationen wissen die Terminals, wann sie Bursts senden dürfen und empfangen können. Wenn unterschiedliche Arten von Bursts, z. B. kurz oder lang, benutzt werden, wird die Art der Bursts vom zentralen Controller innerhalb der Signalisierungs-PDU angekündigt. Besonderes Augenmerk ist auf die Ressourcenanforderungen zu legen. Das sind diejenigen Nachrichten, in denen die Terminals der zentralen Einheit die Belegung ihrer Zellenpuffer, z. B. ausgedrückt durch deren Füllstand, übertragen. Solche Ressourcenanforderungen können entweder im Huckepack mit Uplink-Nachrichten oder einzeln in Uplink-Signalisierungsnachrichten übertragen werden. Ein weiterer wichtiger Punkt, der nachfolgend erläutert wird, ist die Zuweisung von Übertragungsressourcen an Terminals, die in der Downlink-Signalisierung des MAC-Protokolls enthalten ist. Die Formate der Nachrichten für Anforderung und Zuweisung von Übertragungsressourcen haben einen entscheidenden Einfluß auf das Design und die Leistungsfähigkei des Schedulers. Beispiele hierfür werden nachfolgend vorgestellt.

Im folgenden wird zunächst die Kommunikationsphase betrachtet und Optionen für mögliche RR- und RG-Formate vorgestellt.

Ressourcen-Anforderungen (RR) werden als Protokollsteuernachrichten der DLC-Schicht von den DLC-Instanzen der Terminals zur DLC-Instanz der zentralen Einheit übertragen. Für die Übertragung existieren zwei Möglichkeiten:

Während der Uplink-Signalisierung. In diesem Fall besteht die von der MAC-Teilschicht versendete Protokolldateneinheit (MAC-Protocol Data Unit, MAC-PDU) nur aus Protokollsteuerinformation der DLC-Schicht.

Huckepack (piggyback) zu Benutzerdaten der höheren Schicht (in der Regel eine oder mehrere ATM-Zellen) in den normalen MAC-PDUs am Uplink.

Eigenschaft der RR ist, daß sie in irgendeiner Form den Belegungszustand des Zellenpuffers eines Terminals repräsentiert. Wichtig ist, daß eine Ressourcenanforderung RR immer in Verbindung mit der MAC-ID des Terminals übertragen wird. Die zentrale Einheit kann dann mit Hilfe der MAC-ID auf terminalspezifische Parameter zugreifen, die bei der Assoziierung ausgehandelt wurden. Diese Relation kann auch implizit durch die zeitliche Lage innerhalb der Signalisierungsperiode klar sein, da die Ressourcenzuweisung an ein Terminal von der zentralen Einheit im Downlink-Signalisierungsburst mitgeteilt wird.
Verschiedene Möglichkeiten sind in (5) und (6) beschrieben. Beispiele dazu finden sich in den nachfolgenden Ausführungsbeispielen.

Ressourcenzuweisungen RG werden als Protokollsteuernachrichten der DLC-Schicht von der zentralen Einheit zu den Terminals übertragen. Die Übertragung findet grundsätzlich in der Downlink-Signalisierung statt, die mehrere RG für verschiedene Terminals enthalten kann. Die Auswirkung der RG ist im wesentlich die Erlaubnis für Terminals, in bestimmten Zeitschlitzen Nachrichten über das gemeinsame Übertragungsmedium zu versenden. RGs werden auf Basis der Summe der RR aller Terminals durch den Scheduler der zentralen Einheit berechnet.

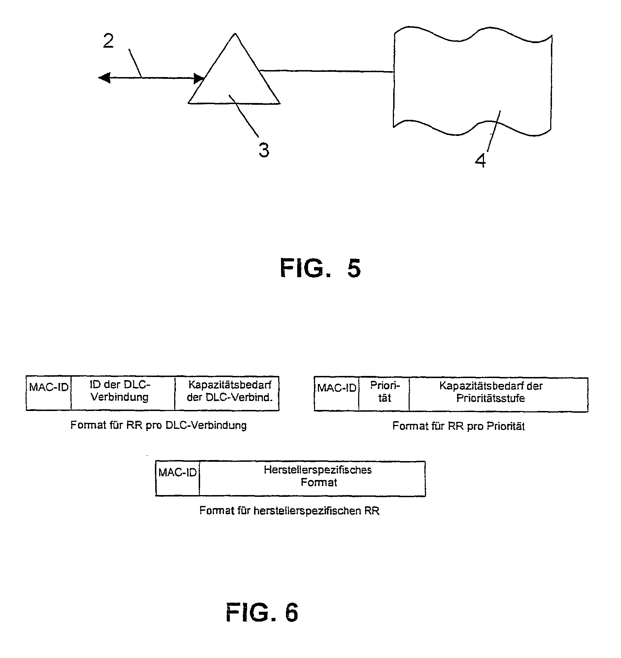

In Figur 5 ist eine zentrale Einheit 3 dargestellt, zu der noch keine Terminals assoziiert sind. Aufgrund der ausgewählten Nachrichtenübertragungsformate muß sie bestimmte Formate und Mechanismen für RR und RG anbieten. Es sei für dieses Beispiel angenommen, daß diese Auswahl verbindlich die Unterstützung von RR und RG pro DLC-Verbindung vorschreibt, siehe [5]. Außerdem sind die optionalen Formate für RR pro Prioritätsstufe, siehe [6] und RG pro Terminal vorausgesetzt.

Die Zentrale Einheit 3 ist von Hersteller A. Sie ermöglicht folgende Möglichkeiten für RR (siehe (5)):
Pro DLC-Verbindung (diese Möglichkeit gehört zu dem Satz ausgewählter Übertragungsformate und gilt daher als fest vereinbart)
Pro Prioritätsstufe (diese Implementierung soll als optional gelten)

Herstellerspezifisches Format, z.B. pro Prioritätsstufe gesondertes Format, etwa innerhalb bestimmter Prioritätsstufen zusätzlich pro DLC-Verbindung.

Beispiele für mögliche Formate dieser RR sind in Figur 6 zu finden. Das Format der RR pro DLC-Verbindung beinhaltet ein Feld, in dem die Identifikation der DLC-Verbindung angegeben ist. Diese ID wird zwischen Terminal und zentraler Einheit bei Aufbau von Verbindungen ausgehandelt. Sie bildet zusammen mit der MAC-ID einen eindeutigen Bezeichner der Verbindung im Bereich der zentralen Einheit. Das restliche Feld beschreibt den Kapazitätsbedarf der DLC-Verbindung, z. B. durch Angabe der Anzahl gepufferter ATM-Zellen und/oder des Ankunftzeitpunktes der ersten Zellen. Das Format der RR pro Prioritätsstufe enthält ein Feld, in dem die Priorität bezeichnet ist, z.B. 2bit für 4 Prioritätsstufen, 3bit für 5 bis 8 Prioritätsstufen. Jede Priorität hat dann für sich ein bestimmtes prioritätsspezifisches Format, das den Rest der RR belegt. Das herstellerspezifische Format kann beliebig sein.

Als RG bietet die zentrale Einheit die beiden oben beschriebenen Möglichkeiten, nämlich pro DLC-Verbindung und pro Terminal an. Die Formate dieser RG soll hier nicht angegeben werden.

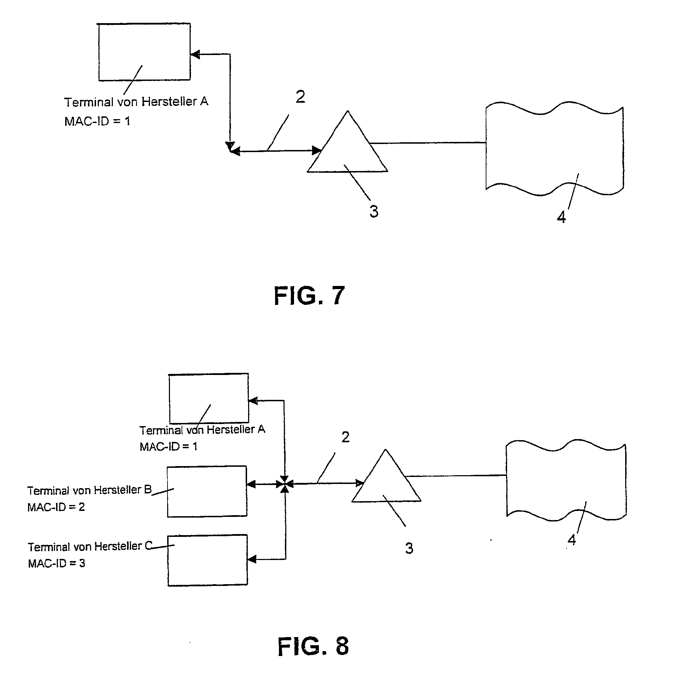

Nun kommt ein Terminal hinzu, das sich mit der zentralen Einheit assoziiert, siehe Figur 7. Das Terminal ist ebenfalls von Hersteller A und beherrscht alle oben genannten Möglichkeiten von RR und RG. Bei der Assoziierung wird daher ausgehandelt, daß das Terminal für RR das herstellerspezifische Format und für RGs das Format "pro Terminal" verwendet wird. In der Kommunikationsphase weiß die zentrale Einheit aufgrund der MAC-ID, die bei jedem RR dabei ist, welches Format das Terminal verwendet. Ebenso werden RGs mit der MAC-ID des Terminals versehen, so daß beide Beteiligten wissen, welches Format verwendet wird.

Im dritten Schritt kommt ein weiteres Terminal hinzu, das die MAC-ID 2 erhält. Es ist von Hersteller B und beherrscht die RR-Formate "pro DLC-Verbindung" und "pro Priorität" sowie die RG-Formate "pro DLC-Verbindung" und "pro Terminal". Darüber hinaus beherrscht es ein RR-Format "Herstellerspezifisch Hersteller B", das von der zentralen Einheit nicht verstanden wird. Dieses Terminal wird im folgenden "Terminal B" genannt.

Im nächsten Schritt assoziiert sich ein weiteres Terminal von Hersteller C, das nur die RR-Formate "pro DLC-Verbindung" und "Herstellerspezifisch Hersteller C" kennt sowie das RG-Format "pro DLC-Verbindung". Dieses Terminal wird im folgenden "Terminal C" genannt. Die sich ergebende Situation ist in Figur 8 dargestellt.

Bei der Assoziierung handeln Terminal B und die zentrale Einheit aus, welches RR-Format verwendet werden soll. Das Terminal signalisiert die möglichen RR-Formate mit Angabe einer Priorität an die zentrale Einheit. In diesem Beispiel wäre die Angabe RR-Format "Herstellerspezifisch B", "pro Priorität" und "pro DLC-Verbindung", wobei die Priorität in der Liste abnimmt. Die zentrale Einheit wählt aus ihren Möglichkeiten diejenige aus, die sie unterstützt und die in der Angabe des Terminals die höchste Priorität hat. Beim RG-Format wird ebenso verfahren. Zentrale Einheit und Terminal B einigen sich auf die Verwendung von RR-Format "pro Priorität" und RG-Format "pro Terminal".

Während der Assoziierungsphase von Terminal C einigen sich Terminal C und die zentrale Einheit auf die Verwendung von RR-Format "pro DLC-Verbindung" und RG-Format "pro DLC-Verbindung".

Nun sind alle Terminals mit der zentralen Einheit in die Kommunikationsphase eingetreten. Bei dieser Konstellation ist zu beachten, daß die Terminals jeweils mit nur einem RR- und RG-Format arbeiten, während die zentrale Einheit mehr als ein Format unterstützen muß.

Im vorigen Ausführungsbeispiel handeln Terminals und Zentrale Einheit bei der Assoziierung fest aus, welche RR- und RG-Formate ein Terminal zu verwenden hat. Die Zuordnung der Formate geschieht in der zentralen Einheit durch die Auswertung der MAC-ID. In einer Weiterbildung der Erfindung werden diese Formate nicht fest ausgehandelt, sondern Terminal und zentrale Einheit tauschen nur aus, welche Formate unterstützt werden. Das Terminal weiß anschließend, welche Formate möglich sind, und kann diese Formate je nach Bedarf verwenden.

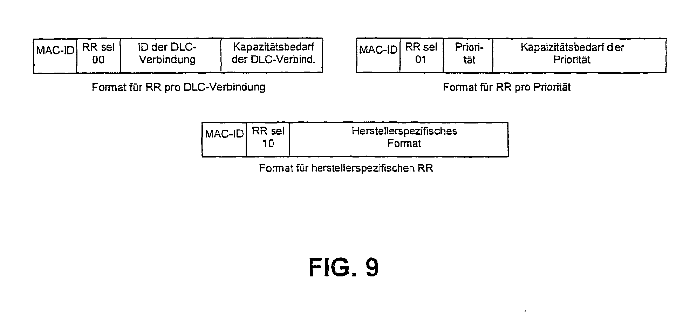

Dazu wird in den Feldern für RR und RG ein Auswahlfeld (RR select) eingefügt, mit dessen Hilfe angegeben wird, welches Format in diesem speziellen RR oder RG verwendet wird. Ein Beispiel für ein RR-Format ist in Figur 9 zu sehen. "RR sel" bezeichnet dabei das RR Auswahlfeld. Es besteht in diesem Beispiel aus zwei Bits (nicht zwingend!). Bei Belegung "00" ist das nachfolgende Format "pro DLC-Verbindung", bei "01" handelt es sich um "pro Priorität" und bei "10" wird ein herstellerspezifisches Format verwendet. Dabei ist zu beachten, daß das Terminal aufgrund der Verhandlungen weiß, welche Formate es verwenden darf und welche nicht.

Im Ausführungsbeispiel ergibt sich die folgende Tabelle für die RR (Ein Kreuz bedeutet "Terminal kann RR-Format verwenden") :

| RR-Format\Terminal | Terminal A | Terminal B | Terminal C |
|---|---|---|---|
| Pro DLC-Verbindung | X | X | X |
| Pro Priorität | X | X | |
| Herstellerspezifisch A | X | | |
| Herstellerspezifisch B | | X | |
| Herstellerspezifisch C | | | X |

Für die Benutzung der RG-Formate ergibt sich:

| RG-Format \ Terminal | Terminal A | Terminal B | Terminal C |
|---|---|---|---|
| Pro DLC-Verbindung | X | X | X |
| Pro Terminal | X | X | |

Die vorherigen Ausführungen beziehen sich auf ATM-Übertragungssysteme. Die beschriebenen Mechanismen lassen sich aber leicht auf Systeme anwenden, in denen in den höheren Schichten andere Protokolle verwendet werden. Ein solches Protokoll ist z.B. das Internet Protocol (IP). In der IP-Welt werden derzeit verschiedene Mechanismen zur Unterstützung von Dienstgüte diskutiert und standardisiert (z.B. Resource Reservation Protocol RSVP oder Differentiated Services), die einen Scheduler in der DLC-Schicht benötigen. Ein weitere Protokoll höherer Schichten ist UMTS (Universal Mobile Telecommunication System)

Ein Terminal ist nicht zwingend ein Benutzerterminal, sondern kann auch ein Konzentrator sein, an den mehrere Terminals angeschlossen werden. In diesem Fall gilt das o.a.

### Verfahren entsprechend zwischen zentraler Einheit und Konzentrator.

Es ist nicht zwingend notwendig, daß alle Pakete von den Terminals zur zentralen Einheit geleitet werden. In diesem Fall werden die Pakete direkt von Terminal zu Terminal versendet. Allerdings wird die Ressourcenzuweisung auch von einer zentralen Einheit auf sehr ähnliche Weise wie beschrieben durchgeführt, so daß das erfindungsgemäße Verfahren auch darauf anwendbar ist.

Es ist nicht zwingend notwendig, daß die zentrale Einheit an ein weiteres Netz angeschlossen ist. In diesem Fall ist Kommunikation nur zwischen den mit einer zentralen Einheit assoziierten Terminals möglich. Hier sind zwei Ausprägungen möglich: (1) die zentrale Einheit arbeitet als Relais, d.h. alle Datenströme zwischen den Terminals erfolgen über die zentrale Einheit. (2) die Terminals tauschen Daten direkt miteinander aus, wobei die zentrale Einheit die Zugriff auf den gemeinsamen Kanal koordiniert.

Falls in der Ausprägung Funk mit ein Handover erfolgt (Übergabe eines Terminals an eine andere zentrale Einheit in Funknetzen, z.B. bei Mobilitätsunterstützung) und die neue zentrale Einheit von einem anderen Hersteller ist, muß die Verwendung von RR- und RG-Formaten zwischen dem Terminal und der neuen zentralen Einheit neu ausgehandelt werden. In diesem Fall ist es möglich, daß einige der bestehenden Verbindungen nicht weiter unterstützt werden können.

Anstelle der Anwendung der Erfindung in ATM-Übertragungssystemen ist auch ein Einsatz mit anderen Transportprotokollen möglich wie TCP/IP, Ethernet oder Point-to-Point Protokoll (PPP). Was hierbei gleich bleibt, ist das beschriebene DLC-Protokoll und die Verhandlung der PR und RG-Formate, das gemäß OSI Schichtenmodell unter diesen Transportprotokollen liegt.

### Literatur:

[1] E. Rathgeb, E. Wallmeier, "ATM - Infrastruktur für die Hoschleistungskommunikation", Springer-Verlag, Berlin Heidelberg New York, 1997
[2] D. Petras, A. Krämling, "MAC protocol with polling and fast collision resolution for an ATM air interface", IEEE ATM Workshop, San Francisco, CA, August 1996
[3] D. Petras, A. Krämling, A. Hettich, "MAC protocol for Wireless ATM: contention free versus contention based transmission of reservation requests", PIMRC' 96, Taipei, Taiwan, October 1996
[4] D. Petras, A. Hettich, A. Krämling: "Design Principles for a MAC Protocol of an ATM Air Interface", ACTS Mobile Summit 1996, Granada, Spain, November 1996
[5] 3ERI94a, "Granularity of Resource Requests and Grants in the BRAN DLC", 1998
[6] D. Petras et al., "Support of ATM Service Classes in Wireless ATM Networks", ACTS Mobile Communications Summit, Aalborg, Dänemark, Oktober 1997

## Patentansprüche

1. Verfahren zum Aufbau einer paketorientierten Datenübertragung zwischen Teilnehmern (1) über ein gemeinsames Übertragungsmedium unter Verwendung mindestens einer zentralen Einheit (3) mit folgenden Schritten:
- ein Teilnehmer (1), welcher eine Datenübertragung wünscht, meldet sich bei einer zentralen Einheit (3) und fragt, ob er assoziiert werden kann,
- wenn die zentrale Einheit (3) dies zulässt, wird dem Teilnehmer (1) eine Zuordnungsidentifizierung für nachfolgende Kommunikationsphasen zugewiesen,
- es wird ein Satz ausgewählter Nachrichtenübertragungsformate bereitgehalten, die sowohl von den Teilnehmern (1) als auch von der zentralen Einheit (3) unterstützt werden, **dadurch gekennzeichnet, dass**
- während einer Assoziierungsphase wird zwischen einem Teilnehmer (1) und der zentralen Einheit (3) über Übertragungsressourcenanforderungen und Übertragungsressourcenzuweisungen verhandelt oder zumindest mitgeteilt, ob nur die ausgewählten Nachrichtenübertragungsformate oder auch andere unterstützt werden,
- während einer Assoziierungsphase wird festgelegt, ob für die Kommunikation ein Nachrichtenübertragungsformat entweder aus dem Satz der ausgewählten Nachrichtenübertragungsformate, ein anderes, insbesondere erweitertes, standardisiertes Nachrichtenübertragungsformat oder ein herstellerspezifisches Nachrichtenübertragungsformat verwendet wird.

2. Verfahren nach Anspruch 1, **dadurch gekennzeichnet, dass** in den Kommunikationsphasen Übertragungsressourcenanforderungen in Verbindung mit der jeweiligen Zuordnungsidentifizierung übertragen werden, damit die zentrale Einheit (3) auf teilnehmerspezifische Parameter, die bei der Assoziierung ausgehandelt wurden, zugreifen kann.

3. Verfahren nach Anspruch 1 oder 2, **dadurch gekennzeichnet, dass** die Übertragungsressourcenanforderungen und/oder Übertragungsressourcenzuweisungen als Protokollsteuernachrichten der Data Link Control Layer gemäß ISO/OSI/Schicht von den Teilnehmern (1) zu einer zentralen Einheit (3) bzw. von der zentralen Einheit (3) zu den Teilnehmern (1) übertragen werden.

4. Verfahren nach einem der Ansprüche 1 bis 3, **dadurch gekennzeichnet, dass** die Übertragungsressourcenanforderungen während der Uplink-Signalisierung vorgenommen wird.

5. Verfahren nach einem der Ansprüche 1 bis 3, **dadurch gekennzeichnet, dass** die Übertragungsressourcenanforderungen zusammen mit Benutzerdaten in einer höheren Schicht im Uplink vorgenommen werden.

6. Verfahren nach einem der Ansprüche 1 bis 3, **dadurch gekennzeichnet, dass** die Übertragungsressourcenzuweisungen in der Downlink-Signalisierung vorgenommen werden, für insbesondere mehrere Übertragungsressourcenzuweisungen für verschiedene Terminals.

7. Verfahren nach einem der Ansprüche 1 bis 6, **dadurch gekennzeichnet, dass** während einer Assoziierungsphase die Übertragungsressourcenanforderungen und die Übertragungsressourcenzuweisungen entweder fest ausgehandelt werden oder nur jeweils ausgetauscht wird, welche Nachrichtenübertragungsformate unterstützt werden und in letzterem Falle ein Terminal für die Übertragung ein unterstütztes Nachrichtenübertragungsformat frei auswählen kann.

8. Verfahren nach einem der Ansprüche 1 bis 7, **dadurch gekennzeichnet, dass** für eine Ressourcenanforderung der Kapazitätsbedarf für eine Nachrichtenverbindung oder bei vereinbarten Prioritätsstufen der Kapazitätsbedarf für diese Prioritätsstufen mitgeteilt wird.

9. Verfahren nach einem der Ansprüche 1 bis 8, **dadurch gekennzeichnet, dass** für eine Übertragung ein ATM-, TCI/IP oder ein Ethernet- Transportprotokoll verwendet wird.

10. Verfahren nach einem der Ansprüche 1 bis 8, **dadurch gekennzeichnet, dass** als Transportprotokoll ein Internet-Protokoll oder ein Universal Mobile Telecomunication System verwendet wird.

11. Verfahren nach einem der Ansprüche 1 bis 10, **dadurch gekennzeichnet, dass** anstelle mindestens eines Terminals ein Funkkonzentrator für den Aufbau der Datenübertragung verwendet wird.

12. Verfahren nach einem der Ansprüche 1 bis 11, **dadurch gekennzeichnet, dass** als zentrale Einheit (3) ein Netzknoten bzw. ein ATM-Multiplexer innerhalb eines ATM-Übertragungssystems verwendet wird.

## Claims

1. Method for setting up a packet-oriented data transmission between subscribers (1) with the aid of a common transmission medium using at least one central unit (3), having the following steps:
- a subscriber (1) wanting to transmit data registers with a central unit (3) and asks whether it can be associated,
- if the central unit (3) permits this then the subscriber (1) is assigned an allocation identifier for subsequent communication phases,
- a set of selected message transmission formats is held ready which are supported both by the subscribers (1) and by the central unit (3), **characterized in that**
- during an association phase a subscriber (1) and the central unit (3) negotiate about transmission resource requests and transmission resource assignments or at least communicate whether just the selected message transmission formats or also others are supported,
- during an association phase a stipulation is made regarding whether a message transmission format either from the set of selected message transmission formats, a different, particularly an extended, standardized message transmission format or a manufacturer-specific message transmission format is used for the communication.

2. Method according to Claim 1, **characterized in that** transmission resource requests are transmitted in the communication phases in connection with the respective allocation identifier so that the central unit (3) can access subscriber-specific parameters which have been negotiated during the association.

3. Method according to Claim 1 or 2, **characterized in that** the transmission resource requests and/or transmission resource assignments are transmitted as protocol control messages on the data link control layer based on the ISO/OSI/layer from the subscribers (1) to a central unit (3) or from the central unit (3) to the subscribers (1).

4. Method according to one of Claims 1 to 3, **characterized in that** the transmission resource requests are made during the uplink signalling.

5. Method according to one of Claims 1 to 3, **characterized in that** the transmission resource requests are made together with user data on a higher layer in the uplink.

6. Method according to one of Claims 1 to 3, **characterized in that** the transmission resource assignments are made in the downlink signalling, for, in particular, a plurality of transmission resource assignments for various terminals.

7. Method according to one of Claims 1 to 6, **characterized in that** during an association phase the transmission resource requests and the transmission resource assignments are either firmly negotiated or there is just a respective exchange regarding which message transmission formats are supported, and in the latter case a terminal can freely select a supported message transmission format for the transmission.

8. Method according to one of Claims 1 to 7, **characterized in that** for a resource request the capacity requirement for a communication link or, in the case of agreed priority levels, the capacity requirement for these priority levels is communicated.

9. Method according to one of Claims 1 to 8, **characterized in that** an ATM, TCI/IP or Ethernet transport protocol is used for a transmission.

10. Method according to one of Claims 1 to 8, **characterized in that** the transport protocol used is an Internet protocol or a Universal Mobile Telecommunication System.

11. Method according to one of Claims 1 to 10, **characterized in that** instead of at least one terminal a radio concentrator is used for setting up the data transmission.

12. Method according to one of Claims 1 to 11, **characterized in that** the central unit (3) used is a network node or an ATM multiplexer within an ATM transmission system.

## Revendications

1. Procédé permettant d'établir une transmission de données par paquets entre des abonnés (1) par l'intermédiaire d'un média de transmission commun en utilisant au moins une unité centrale (3), avec les étapes suivantes :
- un abonné (1), qui souhaite une transmission de données, s'annonce sur une unité centrale (3) et demande s'il peut être associé,
- si l'unité centrale (3) le permet, on affecte à l'abonné (1) une identification d'allocation de phases de communication à venir, et
- on prépare un jeu de formats de transmission de messages sélectionnés, supportés aussi bien par les abonnés (1) que par l'unité centrale (3),
**caractérisé en ce que**
- pendant une phase d'association, un abonné (1) négocie ou au moins communique avec l'unité centrale (3) par l'intermédiaire de demandes de ressources de transmission et d'allocations de ressources de transmission, pour déterminer si seuls les formats de transmissions de messages sélectionnés ou bien également d'autres sont supportés, et
- pendant une phase d'association, on détermine si, pour la communication, on utilise soit un format de transmission de messages provenant du jeu de formats de transmission de messages sélectionnés, soit un format de transmission de messages autre, en particulier élargi, standardisé, soit un format de transmission de messages spécifique au fabricant.

2. Procédé selon la revendication 1,
**caractérisé en ce que**
dans les phases de communication, des demandes de ressources de transmission sont transmises en liaison avec l'identification d'allocation concernée, pour que l'unité centrale (3) puisse recourir à des paramètres, spécifiques à l'abonné, qui sont négociés lors de l'association.

3. Procédé selon la revendication 1 ou 2,
**caractérisé en ce que**
les demandes de ressources de transmission et/ou les allocations de ressources de transmission sont transmises en tant que messages de commande du protocole de la Data Link Control Layer conformément à la couche ISO/OSI par les abonnés (1) vers une unité centrale (3) ou par l'unité centrale (3) vers des abonnés (1).

4. Procédé selon l'une quelconque des revendications 1 à 3,
**caractérisé en ce que**
les demandes de ressources de transmission sont effectuées pendant la signalisation Uplink.

5. Procédé selon l'une quelconque des revendications 1 à 3,
**caractérisé en ce que**
les demandes de ressources de transmission sont effectuées, avec des données utilisateur, dans une couche supérieure de l'Uplink.

6. Procédé selon l'une quelconque des revendications 1 à 3,
**caractérisé en ce que**
les allocations de ressources de transmission sont effectuées dans la signalisation Downlink pour, en particulier, plusieurs allocations de ressources de transmission pour différents terminaux.

7. Procédé selon l'une quelconque des revendications 1 à 6,
**caractérisé en ce que**
pendant une phase d'association, soit on négocie définitivement les demandes de ressources de transmission et les allocations de ressources de transmission, soit on échange uniquement des informations sur les formats de transmission de messages qui sont supportés et, dans ce dernier cas, un terminal de transmission peut choisir librement un format de transmission de messages supporté.

8. Procédé selon l'une quelconque des revendications 1 à 7,
**caractérisé en ce que**
pour une demande de ressources, les besoins en capacités pour une liaison de messagerie ou, en cas de niveaux de priorité convenus, les besoins en capacités pour ces niveaux de priorité, sont communiqués.

9. Procédé selon l'une quelconque des revendications 1 à 8,
**caractérisé en ce qu'**
on utilise un protocole de transport ATM, TCI/IP ou Ethernet pour une transmission.

10. Procédé selon l'une quelconque des revendications 1 à 8,
**caractérisé en ce qu'**
on utilise, comme protocole de transport, un protocole Internet ou un Universal Mobile Telecommunication System.

11. Procédé selon l'une quelconque des revendications 1 à 10,
**caractérisé en ce qu'**
on utilise un concentrateur radio, à la place d'au moins un terminal, pour établir la transmission de données.

12. Procédé selon l'une quelconque des revendications 1 à 11,
**caractérisé en ce que**
comme unité centrale (3) on utilise un noeud de réseau ou un multiplexeur ATM à l'intérieur d'un système de transmission ATM.
